# EUROPEAN PATENT APPLICATION

(11) **EP 1 122 972 A2**
(43) Date of publication of application: **08.08.2001**
(21) Application number: 01102121.9
(22) Date of filing: 31.01.2001
(51) Int. Cl.: H04Q 11/04, H04L 12/28

(54) **ISDN subscriber accommodating and accessing system**

(30) Priority: 04.02.2000 JP 2000028385
(71) Applicant: NEC CORPORATION, Tokyo (JP)
(72) Inventor: Arisawa, Hisashi, NEC Communication Systems, Ltd., Minato-ku, Tokyo (JP)
(74) Representative: VOSSIUS & PARTNER

(57) **Abstract**

Disclosed is a ISDN subscriber accommodating and accessing system having: subscriber side controlling means for accommodating plurality of ISDN subscribers, which is provided with a frame relay function which is defined by a link access protocol (LAP) and a partial terminating function; access network (AN) side controlling means having a frame relay function which is defined by the LAP and a function for terminating an interface line; and local exchange device (LE) side terminal means having a function to terminate a frame of the LAP via the interface line; wherein the ISDN subscriber accommodating and accessing system limits the number of frame relays for confirming a link to be intercommunicated between the respective means.

## Description

The present invention relates to an ISDN subscriber accommodating and accessing system. More specifically, the present invention relates to an ISDN subscriber accommodating and accessing system for decreasing traffic in an accommodating and accessing system apparatus.

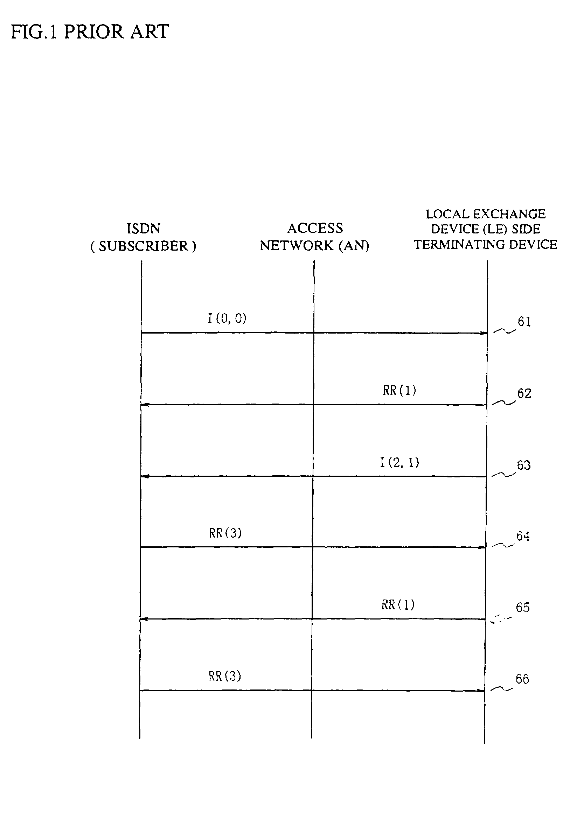

FIG. 1 is an intercommunication sequence view of an example of a conventional ISDN subscriber accommodating and accessing system. According to this conventional example, in step 61, in an access network AN (Access Network), information I (Information) frame I (0, 0) including a transmission order number N (s)= 0 and a reception order number N(r)=0 of ISDN subscriber is only relayed to a local exchange apparatus (LE) side terminating device but it is not terminated.

The LE side terminating device starts from N(s)=2, N(r)=0, receives the I (0, 0) frame from the subscriber in step 62 and transmits a RR (Receive, Ready) frame RR (1) showing that the LE side terminating device is capable of receiving as transmittal confirmation thereof. Subsequently, in step 63, the LE side terminating device transmits an I frame I (2, 1) including N(s)=2, N(r)=1 to the subscriber.

In step 64, the subscriber receives a frame I (2, 1) and transmits a frame RR (3) to the LE side terminating device. In step 65, a frame RR (1) is transmitted and received between the subscriber and the LE side terminating device. In step 66, a frame RR (3) is transmitted and received between the subscriber and the LE side terminating device.

Thus, in the case that no frame is flowed between the subscriber and the LE side terminating device during T203 timer, the RR frame RR (1) to be transmitted in step 65, is only relayed through AN (step 66).

According to the above-described conventional ISDN subscriber accommodating and accessing system, the access network (AN) has to relay all frames from ISDN subscribers to the local exchange device (LE) under the ISDN protocol.

On this account, in the case that there are few communication channels in a constitution such that radio transmission is used between a subscriber accommodating apparatus for accommodating the ISDN subscriber and the local exchange device (LE), this constitution has a line concentration function of n:m (n>m). When the line concentration ratio is high and there are many ISDN subscribers, there occurs a problem such that a heavy load is given to a line section, which is line-concentrated.

Because, the RR frames are periodically transmitted and received between the ISDN subscriber and the local exchange device (LE) even when there are few numbers of transmission of I frame per subscriber (low traffic).

Also, there may exist a subscriber terminal such that the ISDN subscriber is continuously connected such as a PVC (Permanent Virtual Circuit). This subscriber terminal transmits the RR frame even when it is not used actually and it does not transmit the I frame. Therefore, in this case, the traffic of the I frame increases. Further, since each ISDN subscriber terminal can use multiple terminal identifying TEIs (Terminal Equipment Identifiers), there occurs a problem such that traffic increases by the number of TEIs.

Also, in order to make the frame of all ISDN subscribers frame-relayed, the access network (AN) is required to have resources in large quantities. Therefore, this involves a problem such that the access network becomes expensive.

Furthermore, since the transmission of RR frame caused by the T203 timer does not include user data of the ISDN subscriber, this involves a problem such that the throughput in frame relay of I frame deteriorates.

An ISDN subscriber accommodating and accessing system according to the present invention is characterized by comprising subscriber side controlling means for accommodating plurality of ISDN subscribers which is provided with a frame relay function which is defined by a link access protocol (LAP) and a partial terminating function, access network (AN) side controlling means having a frame relay function which is defined by the above-described LAP and a function for terminating an interface line, and local exchange device (LE) side terminal means having a function to terminate a frame of the above-described LAP via the above-described interface line. The above-described ISDN subscriber accommodating and accessing system limits the number of frame relays for confirming a link to be intercommunicated between the above-described respective means.

Further, the ISDN subscriber accommodating and accessing system according to the present invention is characterized in that, in the case that an ISDN subscriber who is contained in the AN device portion which is connected to the above-described LE side terminal means by a V5 interface (ETS300-324, 300-347) line is in a communication state, the intercommunication for confirming a link in a RR frame due to a T203 timer which is defined by an existing ISDN protocol is established between the above-described ISDN subscriber and the above-described subscriber side controlling means and between the above-described AN side controlling means and the above-described LE side terminal means.

Alternatively, the ISDN subscriber accommodating and accessing system according to the present invention is characterized in that the above-described subscriber side controlling means has an analyzing portion for identifying varieties of LAPV5 frames which are received from the ISDN subscriber, a processing portion for editing the frame by analysis of the above-described RR frame, and a subscriber N(r) value conserving portion for conserving a N(r) value which is included in the RR frame which is received from the above-described ISDN subscriber. In the case that the above-described received N(r) value of the RR frame is identical with the above-described conserved N(r) value, the RR frame including the above-described conserved N(r) value is transmitted to the above-described ISDN subscriber in accordance with the T203 timer function which is defined by the ISDN protocol. Alternatively, in the case that the above-described received N(r) value is not identical with the above-described conserved N(r) value, the above-described received RR frame which is updated to the above-described conserved N (r) value is transmitted to the above-described AN side controlling means.

Further, the ISDN subscriber accommodating and accessing system according to the present invention is characterized in that the above-described AN side controlling means has an analyzing portion for identifying varieties of LAPV5 frames which are received from the above-described LE side terminal means, a processing portion for editing the frame by analysis of the above-described RR frame, and a LE side reception N(r) value conserving device for conserving a N(r) value which is included in the RR frame. In the case that the above-described received N(r) value of the RR frame is identical with the above-described conserved N(r) value, the RR frame including the above-described conserved N(r) is transmitted to the above-described LE side terminal means in accordance with a T203 timer function which is defined by the ISDN protocol and in the case that the above-described received N(r) value is not identical with the above-described conserved N(r) value, the above-described received RR frame which is updated to the above-described conserved N (r) value is transmitted to the above-described subscriber side controlling means.

Alternatively, the ISDN subscriber accommodating and accessing system according to the present invention is characterized by comprising a subscriber side radio device for accommodating a plurality of ISDN subscribers who are connected by a fixed line and having a frame relay function of a frame which is defined by a LAPV5-DL, a partial terminating function and a radio communication function, a radio base station for terminating a V5 interface line, having a frame relay function of a frame which is defined by the above-described LAPV5-DL and a partial terminating function and being connected to the above-described subscriber side radio device via a radio relay device, and the above-described LE side device for accommodating the frame from the above-described radio base station by the above-described V5 interface line of the above-described LAPV5-DL.

Alternatively, the ISDN subscriber accommodating and accessing system according to the present invention is characterized in that the above-described radio relay device has an analyzing portion for identifying varieties of LAPV5 frames which are received from the ISDN subscribers who are connected by air, a processing portion for editing the frame by analysis of the above-described RR frame, and a subscriber N(r) value conserving portion for conserving the N(r) value which is included in the RR frame which is received from the above-described ISDN subscriber. In the case that the above-described received N(r) value of the RR frame is identical with the above-described conserved N(r) value, the RR frame including the above-described conserved N(r) is transmitted to the above-described ISDN subscriber in accordance with the T203 timer function which is defined by the ISDN protocol and in the case that the above-described received N(r) value is not identical with the above-described conserved N(r) value, the above-described received RR frame which is updated to the above-described conserved N (r) value is transmitted to the above-described radio base station.
FIG. 1 is an intercommunication sequence view of an example of a conventional ISDN subscriber accommodating and accessing system;
FIG. 2 is a block diagram of an embodiment according to the present invention;
FIG. 3 is a block diagram of another embodiment according to the present invention;
FIG. 4 is a detailed block diagram of the present embodiment;
FIG. 5 is an intercommunication sequence view of a frame of the present embodiment; and
FIG. 6 is a flow chart for explaining an operation of the present embodiment.

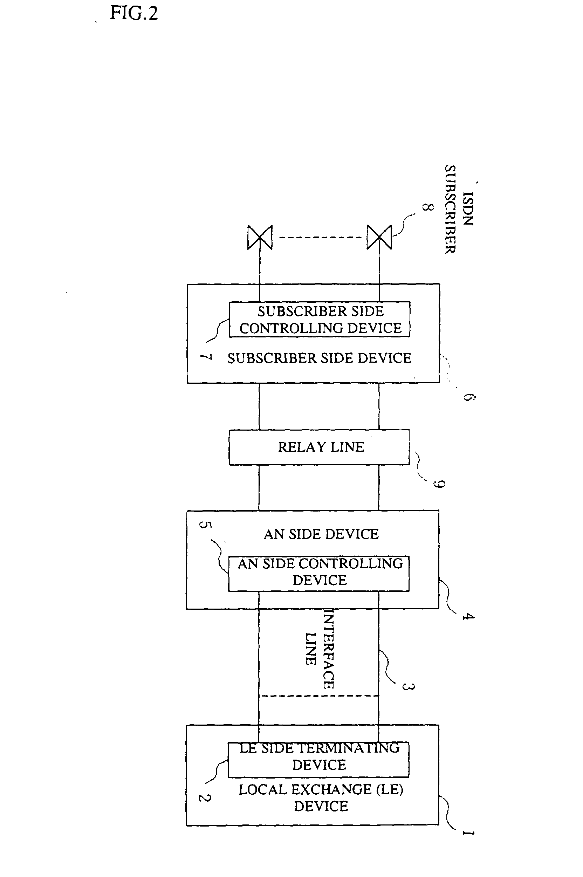

Preferable embodiments of the present invention will be explained below with reference to the drawings. FIG. 2 is a block diagram of an embodiment according to the present invention. According to the present embodiment, a subscriber side device 6 contains a plurality of ISDN subscribers 8 and has a subscriber side controlling device 7 having a relay function of a frame which is defined by a LAP (Link Access Protocol) and a partial terminating function. The subscriber side device 6 is connected to a relay line 9.

An AN (Access Network) side device 4 is provided with an AN side controlling device 5 having a relay function of a frame which is defined by a LAP and a function to terminate the frame from an interface line 3 and is connected to the subscriber side device 6 via the relay line 9.

A LE (Local Exchange) device 1 is provided with a LE side terminating device 2 having a function to terminate a frame which is defined by the LAP via the interface line 3 from the AN side device 4.

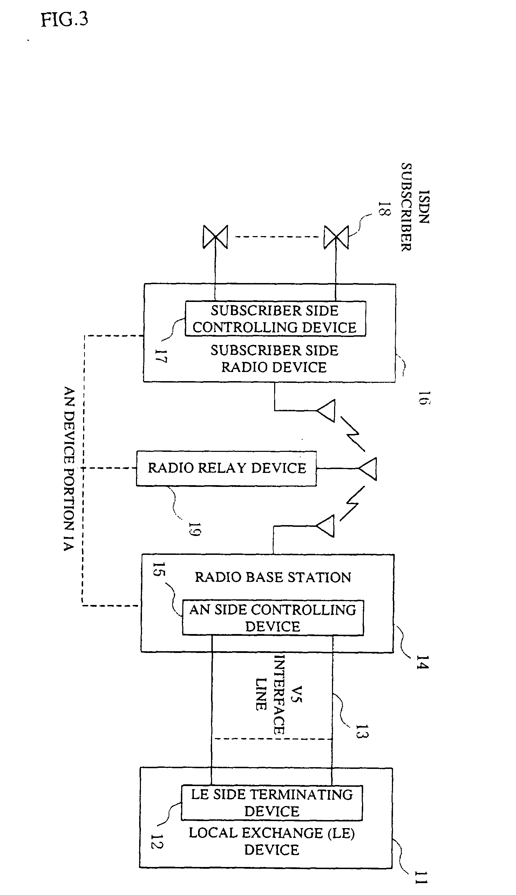

FIG. 3 is a block diagram of another embodiment according to the present invention. In the present embodiment, a LE side terminating device 12 of a local exchange (LE) device 11 to be connected by V5 interfaces (ETS: European Telecommunication Standard) ETS300-324 and 327 terminates a link access protocol (LAP) V5 data link sublayer (DL) via a V5 interface line 3.

An access network (AN) device portion 1A is configured by a radio base station 14, a radio relay device 19 and a subscriber side radio device 16.

The subscriber side radio device 16 connects a radio transmission and reception function and a plurality of ISDN (Integrated Services Digital Network) subscribers 18 with a fixed-line to accommodate them. A subscriber side controlling device 17 has a frame relay function of a frame which is defined by a LAPV5-DL and a partial terminating function.

The radio base station 14 terminates the V5 interface line 13 to be connected to the LE side device 11 and is provided with an AN side controlling device 15 having a relay function of a frame which is defined by the LAPV5-DL. Further, the radio base station 14 is connected to a subscriber side radio device 16 by a radio transmission and reception function via the radio relay device 19.

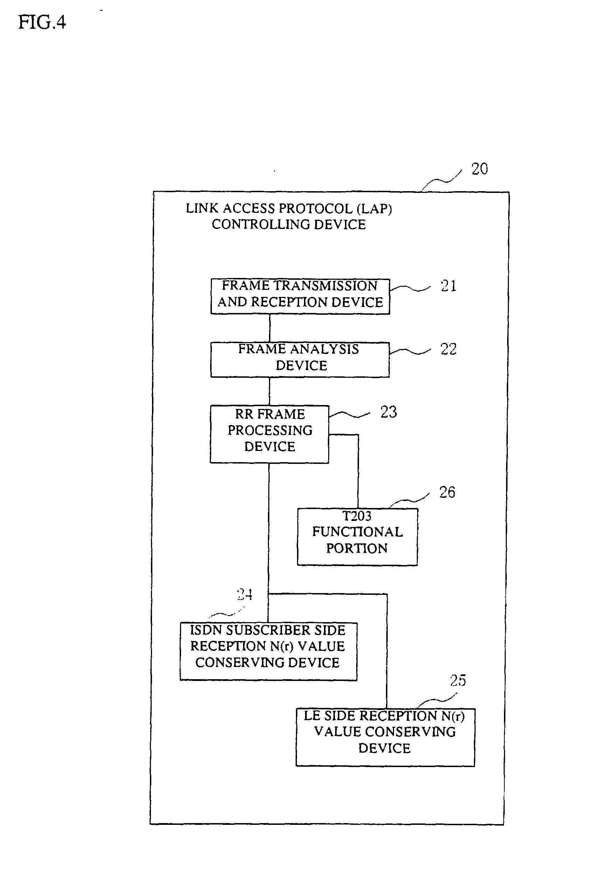

FIG. 4 is a detailed block diagram of the AN side controlling device 15 and the subscriber side controlling device 17. A link access protocol (LAP) controlling device 20 is provided with a frame transmission and reception device 21 of a LAPV5 which transmits and receives a frame, a frame analysis device 22 of a LAPV5 which identifies varieties of frames, a RR frame processing device 23 for analyzing and editing a RR (Receive Ready) frame which includes a reception order number N(r) and shows that it is capable of receiving, an ISDN subscriber side N(r) value conserving device 24 for conserving a N(r) which is included in the RR frame which is received from the ISDN subscriber 18, a LE side reception N(r) value conserving device 25 for conserving the N(r) which is included in the RR frame which is received from the LE side device 11, and a T203 functional portion 26 having a T203 timer function which is defined by an existing ISDN protocol and an operational function when the T203 timer is time out.

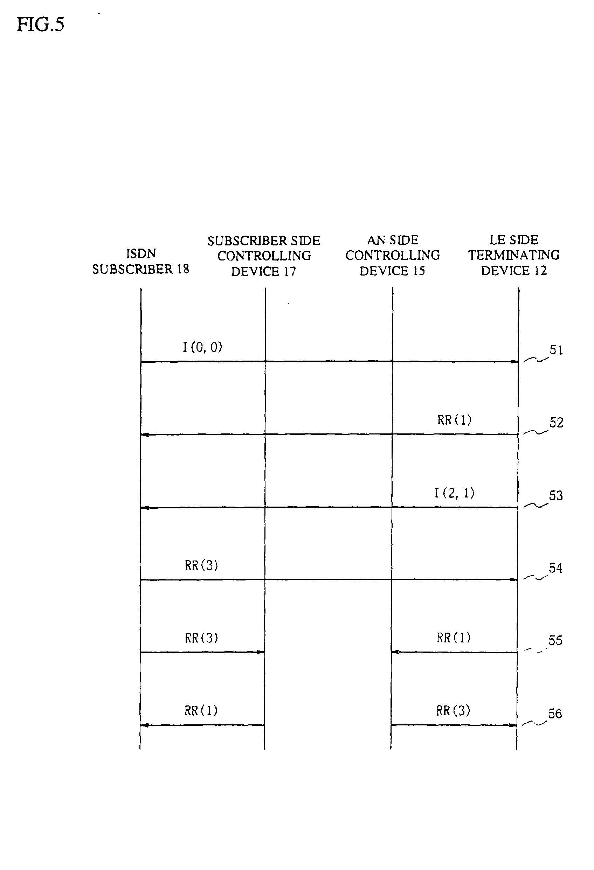

Next, the operation of the present embodiment will be explained with reference to FIGS. 3, 4, 5 and 6. In the intercommunication sequence view of a frame in FIG. 5, an information I (Information) frame I (0, 0) including N(s) = 0 and a reception order number N(r) = 0 of the ISDN subscriber 18 is only relayed to the LE side terminating device 12 of the local exchange (LE) device 11 via the subscriber side controlling device 17 of the subscriber radio device 16, the radio relay device 19 and the AN side controlling device 15 of the radio base station 14 in step 51 but it is not terminated.

The LE side terminating device 12 starts from N(s) = 2, N(r) = 0. The LE side terminating device 12 receives I (0, 0) from the ISDN subscriber 18 in step 52 and transmits the RR (Receive Ready) frame RR (1) showing that it is capable of receiving as transmittal confirmation thereof. Consequently, the LE side terminating device 12 transmits the I frame I (2, 1) including N(s) = 2, N(r) = 1 to the ISDN subscriber 18 in step 53.

In step 54, the ISDN subscriber 18 receives the frame I (2, 1) and transmits the frame RR (3) to the LE side terminating device 2.

In step 55, the subscriber side controlling device 17 receives the RR frame RR (3) due to the T203 timer from the ISDN subscriber 18 to identify whether the received RR frame RR (3) is subject to frame relay or not. When it is not subject to the frame relay, the frame is not relayed to the LE side terminating device 12 and the subscriber side controlling device 17 transmits the RR frame RR (1) to the ISDN subscriber 18 (step 56). Alternatively, the AN side controlling device 15 receives the frame RR (1) from the LE side terminating device 12 in step 55 to identify whether the received frame RR (1) is subject to the frame relay or not. When it is not subject to the frame relay, the AN side controlling device 15 transmits the frame RR (3) to the LE side terminating device 12 (step 56).

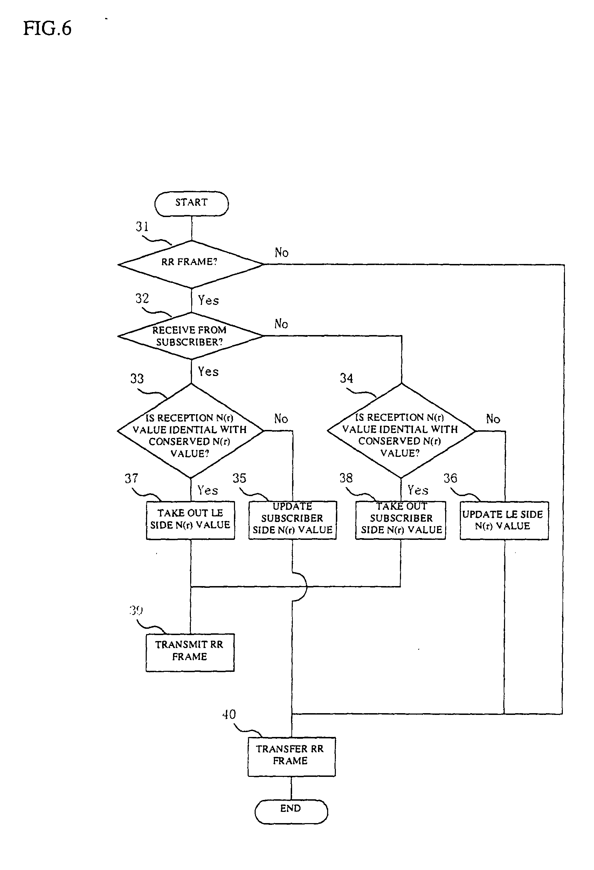

Next, the operation of the present embodiment will be explained with reference to a flow chart in FIG. 6. In step 31, a LAPV5 frame which is transmitted from the ISDN subscriber 18 by the ISDN protocol is received by the frame transmission and reception device 21 of the link access protocol (LAP) controlling device 20 in the AN side controlling device 15 or the subscriber side controlling device 17. Then, the received LAPV5 frame is transmitted to the frame analysis device 22 and the frame analysis device 22 determines varieties of the received LAPV5 frame. If the received LAPV5 frame is a RR frame which is required to response, the frame is transmitted to the RR frame processing device 23.

In step 32, the RR frame processing device 23 identifies whether the received LAPV5 frame is the LAPV5 frame which is received from the ISDN subscriber 18 or the LAPV5 frame which is received from the LE side device 11.

In step 33, if it is the LAPV5 frame which is received from the ISDN subscriber 18, the N(r) value which is conserved in the ISDN subscriber side reception N(r) value conserving device 24 is taken out therefrom to be compared with the N(r) value in the received RR frame.

Alternatively, in step 33, if the N(r) value in the received RR frame is different from the conserved N(r) value, the N(r) value which is conserved in the ISDN subscriber side reception N(r) value conserving device 24 is updated to the N(r) value in the received RR frame (step 35) and the received RR frame is transferred to the AN side controlling device 15 (step 40).

Additionally, in step 34, if the N(r) value in the received RR frame is different from the N(r) value which is conserved in the LE side reception N(r) value conserving device 25, the conserved the N(r) value is updated to the N(r) value in the received RR frame (step 36) and the received RR frame is transferred to the subscriber side controlling device 17 (step 40).

In the case that the T203 timer of the ISDN subscriber 18 or the LE side terminating device 12 detects time out by using the T203 timer function which is defined by the ISDN protocol, the T203 functional portion 26 performs the operation which is defined by the existing ISDN protocol. In this case, communication is established between the ISDN subscriber 18 and the LE side terminating device 12, so that no-communication state between the ISDN subscriber 18 and the subscriber side controlling device 17 and no-communication state between the LE side terminating device 12 and the AN side controlling device 15 are identical.

In the present embodiment, the constitution of the LAP controlling device 20 has the T203 function of the existing ISDN protocol. However, the LAP controlling device 20 may not have the T203 functional portion 26. In this case, when no-response state of the ISDN subscriber 18 or the LE side terminating device 12 is generated, it is detected by the fact that when another (of the ISDN subscriber and the LE side terminating device 12) I frame (accommodating user data) is transmitted, the RR frame is not returned, so that the AN device portion 1A does not detect it.

The radio relay device 19 does not contain the subscriber. However, it may contain the ISDN subscriber by air by being provided with the function of the LAP controlling device 20.

As described above, according to the present invention, limiting the number of the frames for confirming a link, which is intercommunicated between subscriber side controlling means for accommodating the ISDN subscriber and access network side controlling means to be connected to the local exchange side device by the interface line, the traffic of the circuit between the subscriber side controlling means and the access network side controlling means is capable of being decreased.

## Claims

1. An ISDN subscriber accommodating and accessing system comprising:
subscriber side controlling means for accommodating plurality of ISDN subscribers, which is provided with a frame relay function which is defined by a link access protocol (LAP) and a partial terminating function;
access network (AN) side controlling means having a frame relay function which is defined by said LAP and a function for terminating an interface line; and
local exchange device (LE) side terminal means having a function to terminate a frame of said LAP via said interface line; wherein said ISDN subscriber accommodating and accessing system limits the number of frame relays for confirming a link to be intercommunicated between said respective means.

2. An ISDN subscriber accommodating and accessing system according to claim 1, wherein, in the case that an ISDN subscriber who is contained in an AN device portion which is connected to said LE side terminal means by a V5 interface (ETS300-324, 300-347) line is in a communication state, the intercommunication for confirming a link in a RR frame due to a T203 timer which is defined by an existing ISDN protocol is established between said ISDN subscriber and said subscriber side controlling means and between said AN side controlling means and said LE side terminal means.

3. An ISDN subscriber accommodating and accessing system according to claim 1 or 2, wherein said subscriber side controlling means has an analyzing portion for identifying varieties of LAPV5 frames which are received from the ISDN subscriber, a processing portion for editing the frame by analysis of said RR frame and a subscriber N(r) value conserving portion for conserving a N(r) value which is included in the RR frame which is received from said ISDN subscriber;
in the case that said received N(r) value of the RR frame is identical with said conserved N(r) value, the RR frame including said conserved N(r) is transmitted to said ISDN subscriber in accordance with the T203 timer function which is defined by the ISDN protocol and in the case that said received N(r) value is not identical with said conserved N(r) value, said received RR frame which is updated to said conserved N (r) value, is transmitted to said AN side controlling means.

4. An ISDN subscriber accommodating and accessing system according to claim 1 or 2, wherein said AN side controlling means has an analyzing portion for identifying varieties of LAPV5 frames which are received from said LE side terminal means, a processing portion for editing the frame by analysis of said RR frame and a LE side reception N(r) value conserving portion for conserving a N(r) value which is included in the RR frame;
in the case that said received N(r) value of said RR frame is identical with said conserved N(r) value, the RR frame including said conserved N(r) is transmitted to said LE side terminal means in accordance with a T203 timer function which is defined by the ISDN protocol and in the case that said received N(r) value is not identical with said conserved N(r) value, said RR frame which is updated to said conserved N (r) value is transmitted to said subscriber side controlling means.

5. An ISDN subscriber accommodating and accessing system according to claim 2, comprising:
a subscriber side radio device for accommodating a plurality of ISDN subscribers who are connected by a fixed line and having a frame relay function of a frame which is defined by a LAPV5-DL, a partial terminating function and a radio communication function;
a radio base station for terminating a V5 interface line, having a frame relay function of a frame which is defined by said LAPV5-DL and a partial terminating function and being connected to said subscriber side radio device via a radio relay device; and
said LE side device for accommodating the frame from said radio base station by said V5 interface line of said LAPV5-DL.

6. An ISDN subscriber accommodating and accessing system according to claim 5, wherein said radio relay device has an analyzing portion for identifying varieties of LAPV5 frames which are received from the ISDN subscribers who are connected by air, a processing portion for editing the frame by analysis of said RR frame and a subscriber N(r) value conserving portion for conserving the N(r) value which is included in the RR frame which is received from said ISDN subscriber;
in the case that said received N(r) value of the RR frame is identical with said conserved N(r) value, the RR frame including said conserved N(r) is transmitted to said ISDN subscriber in accordance with the T203 timer function which is defined by the ISDN protocol and in the case that said received N(r) value is not identical with said conserved N(r) value, said received RR frame which is updated to said conserved N (r) value is transmitted to said radio base station.
